# EUROPÄISCHE PATENTSCHRIFT

(11) **EP 1 426 244 B1**
(45) Veröffentlichungstag und Bekanntmachung des Hinweises auf die Patenterteilung: **03.05.2006**
(21) Anmeldenummer: 03024735.7
(22) Anmeldetag: 29.10.2003
(51) Int. Cl.: B60R 21/16, B60R 21/20

(54) **Kraftfahrzeug mit einer Karosseriestruktur und mit einer Seitenaufprallschutzeinrichtung**
Vehicle with a body structure and a side collision protection device
Véhicule avec structure de carrosserie et un dispostif de protection en cas de choc latéral

(30) Priorität: 07.12.2002 DE 10257248
(43) Veröffentlichungstag der Anmeldung: 09.06.2004
(73) Patentinhaber: Dr. Ing. h.c. F. Porsche Aktiengesellschaft, 70435 Stuttgart (DE)
(72) Erfinder: Linder, Leo, 89269 Vöhringen (DE); Müller, Frank, 71229 Leonberg (DE)

(56) Entgegenhaltungen:
- DE-A- 19 646 698
- US-A- 5 556 128
- US-A- 5 636 862
- US-A- 5 678 852

## Beschreibung

Bei der Erfindung wird ausgegangen von einem Kraftfahrzeug mit einer Karosseriestruktur, die eine Seitentür aufweist, mit einem an der Karosseriestruktur befestigten Fahrzeugsitz und mit einer Seitenaufprallschutzeinrichtung für einen Fahrzeuginsassen, gemäß Oberbegriff des Anspruchs 1.

Die gattungsbildende DE 196 46 698 A1 beschreibt ein Kraftfahrzeug mit einer eine Seitenstruktur mit Seitenfenster umfassenden Karosseriestruktur. An der Karosseriestruktur ist ein Fahrzeugsitz befestigt. Das Kraftfahrzeug weist ferner eine Seitenaufprallschutzeinrichtung für einen Fahrzeuginsassen auf, die einen Kopfairbag aufweist, der aus der Sitzlehne im Bereich der Brüstung der Seitenstruktur heraus nach oben mittels einer ersten Aufblaseinrichtung entfaltbar ist. In der Sitzlehne ist in Ruhestellung ein als Thoraxairbag ausgebildeter Seitenairbag angeordnet, der mittels einer zweiten Aufblaseinrichtung aus der seitlichen Lehnenwange heraus nach vorn entfaltbar ist und der in seinem entfalteten Zustand mit seinem oberen Begrenzungsrand benachbart zur Brüstung zu liegen kommt.

Aus der DE 43 04 152 A1 ist ein Kraftfahrzeug bekannt, welches eine Karosseriestruktur aufweist, die eine Seitenstruktur mit einer Seitentür umfasst. An der Karosseriestruktur, insbesondere an deren Bodengruppe, ist ein Fahrzeugsitz befestigt. Für einen Insassen des Kraftfahrzeugs ist eine Seitenaufprallschutzeinrichtung vorgesehen, die zwei separate Airbags mit jeweils einer Aufblaseinrichtung besitzt. Einer der Airbags ist als Kopfairbag ausgebildet und tritt im Bereich der Brüstung der Seitentür nach oben aus, also in Richtung zum Dach der Karosseriestruktur. Der zweite Airbag mit seiner Aufblaseinrichtung ist bei dem bekannten Fahrzeug am Sitz unterhalb der Sitzfläche angeordnet und bildet einen Seitenairbag für den zur Tür benachbart liegenden Oberschenkel des Fahrzeuginsassen.

Aufgabe der Erfindung ist es, ein Kraftfahrzeug der gattungsgemäßen Art anzugeben, bei dem die Seitenaufprallschutzeinrichtung optimiert ist und in Fahrzeugen mit unterschiedlicher Karosseriestruktur einsetzbar ist.

Gelöst wird diese Aufgabe mit einem Kraftfahrzeug, welches die in Anspruch 1 genannten Merkmale aufweist. Weitere, die Erfindung ausgestaltende Merkmale sind in den Unteransprüchen angegeben.

Die mit der Erfindung hauptsächlich erzielten Vorteile sind folgende: Dadurch, dass sich der Kopfairbag erfindungsgemäß aus der Brüstung heraus nur nach oben und parallel zum Seitenfenster entfaltet, weist der Kopfairbag beim Füllen nur eine geringe Kraftkomponente bzw. Ausdehnungskomponente in Richtung des Fahrzeuginsassen auf. Durch die separate Ausgestaltung von Kopfairbag und Thoraxairbag mit jeweils einer eigenen, ggf. mehrstufigen, Aufblaseinrichtung kann die pyrotechnische und/oder gasförmige Ladung der Aufblaseinrichtungen gering gewählt werden. Überdies können die Aufblasdrücke gegenüber großvolumigen Airbags, die mit einem einzigen Kissen sowohl Kopf- als auch Thorax schützen, reduziert werden. Außerdem ist die erfindungsgemäße Seitenaufprallschutzeinrichtung sowohl für geschlossene Fahrzeuge, wie beispielsweise Limousinen oder Coupés, und für offene Fahrzeuge verwendbar, die keinen Dachlängsholm aufweisen oder dieser zur Aufnahme eines Kopfairbags ungeeignet ist. Dadurch, dass der Thoraxairbag in gefülltem Zustand mit seinem oberen Begrenzungsrand benachbart zur Brüstung der Seitenstruktur liegt, ist ein im Wesentlichen durchgehender Seitenaufprallschutz mit den aktivierten Airbags vorhanden, so dass übergangslos sowohl Kopf- als auch Brustbereich bei einer Seitenkollision überdeckt sind.

Bei einer in Anspruch 2 angegebenen Weiterbildung der Erfindung ist vorteilhaft, dass der aus der Sitzlehne austretende Thoraxairbag nicht mit einer Sicherheitsgurteinrichtung für den Insassen kollidiert, da er so in dem von dem Sicherheitsgurt aufgespannten Dreieck zwischen oberem und unterem Anlenkpunkt angeordnet werden kann.

Nach einem bevorzugten Ausführungsbeispiel gemäß Anspruch 3 wird der Thoraxairbag aus der Austrittsöffnung nach schräg oben in Richtung Brüstung entfaltet, so dass er bis an den Kopfairbag heranreicht, der aus der Brüstung heraustritt.

Bei einem in Anspruch 4 angegebenen Ausführungsbeispiel ist vorteilhaft, dass für andere Einbauteile in der Seitenstruktur genügend Einbauraum vorhanden ist, weil das Kopfairbagmodul, umfassend den Kopfairbag und die zugehörende Aufblaseinrichtung, unmittelbar unterhalb der Brüstung liegt.

Entsprechend einer Weiterbildung mit den in Anspruch 5 angegebenen Merkmalen ist vorteilhaft, dass gegenüber anderen bekannten Seitenaufprallschutzeinrichtungen (DE 44 09 770 A1), bei denen beim Füllen der Airbags eine Kraftkomponente in Richtung des Insassen entsteht, die erfindungsgemäße Seitenaufprallschutzeinrichtung eine derartige Komponente in geringem Umfang aufweist.

Gemäß Anspruch 8 kann der Thoraxairbag sich mit seinem unteren Begrenzungsrand bis in den Beckenbereich erstrecken, so dass ein kombiniertes Kissen für Thorax - und Beckenbereich gebildet ist.

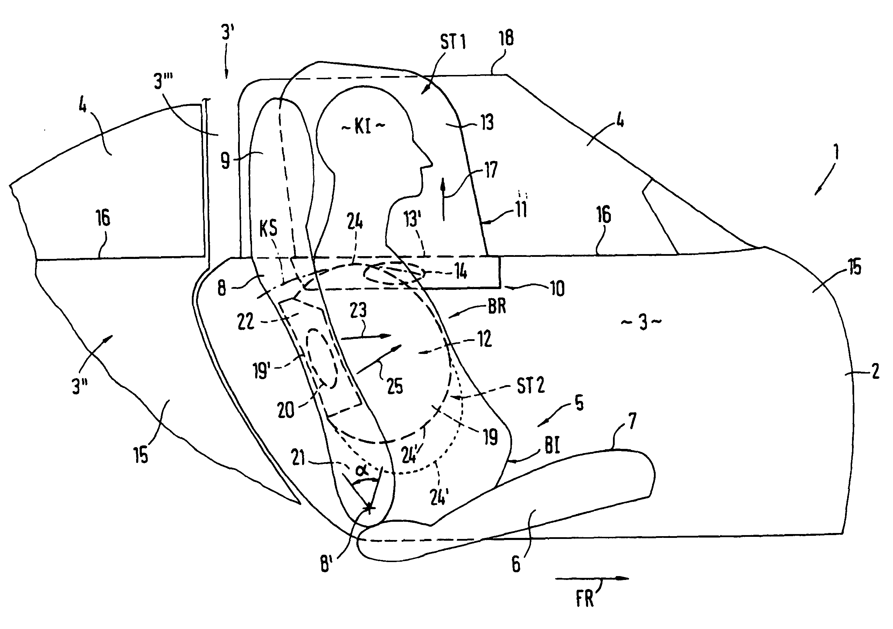

Die Erfindung wird nachfolgend anhand von Ausführungsbeispielen mit Bezug auf die Zeichnung näher erläutert. Die einzige Figur zeigt ausschnittweise ein Kraftfahrzeug 1 mit einer Seitenstruktur 3' einer Karosseriestruktur 2 und mit einem Fahrzeugsitz 5 sowie einer Seitenaufprallschutzeinrichtung 10.

Von einem hier teilweise dargestellten Kraftfahrzeug 1, insbesondere als Sportwagen ausgeführter Personenwagen, mit einer Karosseriestruktur 2 ist eine Seitenstruktur 3' mit zumindest einer Seitentür 3 und einem Fondseitenteil 3", ggf. mit einer B - Säule 3"' gezeigt. Die Seitenstruktur 3' besitzt wenigstens ein ggf. versenkbares Seitenfenster 4 in der Seitentür 3 und vorzugsweise im Fondseitenteil 3'. An der Karosseriestruktur 2 ist ein vorderer Fahrzeugsitz 5 befestigt, der insbesondere an einer hier nicht gezeigten Bodengruppe der Karosseriestruktur 2 in Fahrzeuglängsrichtung verschieblich geführt sein kann. Der Fahrzeugsitz 5 ist mit einem Sitzelement 6 mit einer Sitzfläche 7 und mit einer etwa aufrechten Sitzlehne 8 ausgestattet, die eine ggf. integrierte Kopfstütze 9 trägt. Die Sitzlehne 8 ist um eine untere Schwenkachse 8' in ihrer Neigung verstellbar. Hinter dem vorderen Fahrzeugsitz 5 kann ein Fondsitz (nicht dargestellt) angeordnet sein, der neben dem teilweise gezeigten Fondseitenteil 3' an der Karosseriestruktur 2 gehalten ist. Das Fondseitenteil 3" kann ggf. mit einer Seitentür ausgestattet sein.

Das Kraftfahrzeug 1 weist ferner für ein oder mehrere Sitze 5 jeweils eine Seitenaufprallschutzeinrichtung 10 auf, die ein Kopfschutzmodul 11 und ein Thoraxschutzmodul 12 umfasst. Das Kopfschutzmodul 11 weist einen als aufblasbares Kissen ausgebildeten Kopfairbag 13 und eine erste Aufblaseinrichtung 14, insbesondere Gasgenerator, auf.

Im Folgenden wird die Seitenaufprallschutzeinrichtung 10 rein beispielhaft im Zusammenhang mit dem vorderen Fahrzeugsitz 5 beschrieben, obwohl diese Seitenaufprallschutzeinrichtung 10 auch dem Fondsitz zugeordnet sein kann. Das Kopfschutzmodul 11 ist in der Seitenstruktur 3', beispielsweise Seitentür 3, zwischen Außenblech und Innenverkleidung 15 der Seitenstruktur 3' unmittelbar unterhalb der Brüstung 16 bzw. daran angrenzend angeordnet. Somit kann der Kopfairbag 13 nach oben (Pfeil 17) zwischen dem Seitenfenster 4 und der Innenverkleidung 15 an der Brüstung 16 parallel zum Seitenfenster 4 heraustreten. Das das untere Ende 13' des Kopfairbags 13 kann so nahe der Brüstung 16 zu liegen kommen. Die Innenverkleidung 15 kann in Richtung des Fahrzeugsitzes 5 wegklappen, so dass sich der Kopfairbag nur nach oben und parallel zum Seitenfenster 5 entfaltet, ohne dabei eine wesentliche Ausdehnungskomponente in Richtung Fahrzeugsitz 5 aufzubauen. Im gezeigten Ausführungsbeispiel ist das Kopfschutzmodul 11 - in Fahrtrichtung FR gesehen - etwa in der hinteren Hälfte der Seitentür 3 angeordnet, so dass der Kopfairbag 13 sich etwa in dieser Hälfte der Seitentür 3 aus seiner zusammengefalteten Ruhestellung entfalten kann und in dem gefüllten Zustand ST1 den Kopf Kl des Insassen überragt, also bis etwa an das obere Ende 18 des Seitenfensters 4 heranreicht oder dieses Ende 18 etwas überragt. In dem entfalteten Zustand ST 1 liegt der Kopfairbag 13 zwischen dem Seitenfenster 4 und dem Kopf KI des Insassen.

Das Thoraxschutzmodul 12 umfasst einen als aufblasbares Kissen ausgebildeten Thoraxairbag 19, der in gefülltem Zustand ST2 eingezeichnet ist und dabei zwischen der Seitenstruktur 3' bzw. der Innenverkleidung 15 und dem Brustbereich BR des Insassen angeordnet ist. Aktiviert wird der Thoraxairbag 19 aus einer zweiten Aufblaseinrichtung 20, insbesondere Gasgenerator. Aktiviert werden der Thoraxairbag 19 und Kopfairbag 13 vorzugsweise gemeinsam, wenn ein Fahrzeugaufprall ermittelt wird. Dies kann bei einem Seitenaufprall oder auch bei einem Front - und/oder Heckaufprall ggf. mit teilweiser Überdeckung (Offset) der Fall sein und/oder wenn sich das Kraftfahrzeug 1 um seine Hochachse dreht und/oder ein Fahrzeugüberschlag eintritt oder bevorsteht. Selbstverständlich kann auch lediglich der Kopfairbag 13 oder Thoraxairbag 19 aktiviert werden; auch eine Aktivierung der beiden Airbags 13 und 19 nacheinander mit oder ohne zeitlichem Abstand ist möglich. Die Aktivierung der Airbags 13 und 19 übernimmt eine hier nicht gezeigte Steuerung, die ein Signal wenigstens eines Sensors (nicht dargestellt) erhält.

Das Thoraxschutzmodul 12 ist in einer Aufnahme innerhalb der Sitzlehne 8 benachbart zur Seitenstruktur 3' bzw. Seitentür 3 angeordnet, wobei die Austrittsöffnung für den Thoraxairbag 19 an der seitlichen, der Seitenstruktur 3' bzw. Seitentür 3 zugewandten Lehnenwange 21 liegt und von einer Abdeckung 22 verschlossen wird, die bspw. erst beim Aktivieren des Thoraxairbags 19 wegbewegt oder geöffnet wird und somit die Austrittsöffnung am Thoraxschutzmodul 12 bzw. an der Lehnenwange 21 freigibt. Ausgehend von seiner zusammengefalteten Ruhestellung innerhalb der Sitzlehne 8 wird der Thoraxairbag 19 beim Aktivieren im Wesentlichen nach vorne (Pfeil 23) aus der Austrittsöffnung heraustreten und sich dabei etwa parallel zur Seitenstruktur 3' entlang der Innenverkleidung 15 weiter nach vorn (in Fahrtrichtung FR bzw. parallel zur Fahrzeuglängsrichtung) erstrecken, bis er seinen gefüllten bzw. entfalteten Zustand ST2 erreicht. Dabei liegt der obere Begrenzungsrand 24 des Thoraxairbags 19 benachbart zur Brüstung 16 bzw. zum unteren Ende 13' bzw. zum Austrittsbereich des Kopfairbags 13, welcher Austrittsbereich durch das Wegklappen der Innenverkleidung 15 zwischen Innenverkleidung 15 und dem dahinter liegenden Türinnenblech (nicht dargestellt) innerhalb der Brüstung 16 liegt. Beide Airbags 13 und 19 bilden so einen im Wesentlichen durchgehenden Seitenaufprallschutz. Der obere Begrenzungsrand 24 reicht bis zur Brüstung 16 bzw. zum unteren Ende 13' heran oder liegt mit geringem Abstand darunter, wie in der Fig. dargestellt, oder überragt die Brüstung 16, so dass eine geringe Überlappung mit dem Kopfairbag 13 vorliegen kann. Der untere Begrenzungsrand 24' des Thoraxairbags 19 kann sich - wie punktiert eingezeichnet - bis in den Beckenbereich BI des Insassen erstrecken.

Die von der Abdeckung 22 freigegebene Austrittsöffnung für den Thoraxairbag 19 liegt unterhalb dem Niveau der Brüstung 16 der Seitenstruktur 3' und der Thoraxairbag 19 wird, um die Brüstung 16 mit seinem oberen Begrenzungsrand 24 erreichen zu können, nach schräg oben (Pfeil 25) entfaltet. Im gezeigten Ausführungsbeispiel besitzt der Thoraxairbag 19 - in Seitenansicht gesehen - etwa eine halbkreisförmige oder ovale Kontur und ist mit seinem befestigten Ende 19' mit dem Thoraxschutzmodul 12 verbunden. Bevorzugt folgt der obere Begrenzungsrand 24 wenigstens abschnittweise und annähernd einer gedachten Kreislinie KS, die - und damit auch teilweise der Begrenzungsrand 24 - um die Schwenkachse 8' der Sitzlehne 8, vorzugsweise konzentrisch, verläuft, wodurch der Begrenzungsrand 24 unabhängig von dem Sitzlehnenneigungswinkel α benachbart zur Brüstung 16 zu liegen kommt, wenn der Thoraxairbag 19 in den gefüllten Zustand ST 2 gebracht wird.

Durch die tiefe Anordnung des Fahrzeugsitzes 5, wie dies bei Sportwagen üblich ist, kann der aus der Brüstung 16 heraustretende Airbag 13 lediglich als Kopfairbag wirken und diesen Bereich des Insassen schützen. Um darüber hinaus den Schulterbereich und zumindest den Thorax zu schützen, ist der Thoraxairbag 19 vorgesehen, der sich bis an die Brüstung 16 heran erstreckt.

## Patentansprüche

1. Kraftfahrzeug (1) mit einer Karosseriestruktur (2), die eine Seitenstruktur (3') mit einem Seitenfenster (4) aufweist, mit einem an der Karosseriestruktur (2) befestigten Fahrzeugsitz (5) und mit einer Seitenaufprallschutzeinrichtung (10) für einen Fahrzeuginsassen, welche Seitenaufprallschutzeinrichtung (10) einen im Bereich der Brüstung (16) der Seitenstruktur (3') nach oben entfaltbaren Kopfairbag (13) mit einer ersten Aufblaseinrichtung (14) und einen aus dem Fahrzeugsitz (5) seitlich heraus entfaltbaren Seitenairbag mit einer zweiten Aufblaseinrichtung (20) umfasst, welcher Seitenairbag als Thoraxairbag (19) ausgebildet ist, der in Ruhestellung zusammen mit der zweiten Aufblaseinrichtung (20) innerhalb der Sitzlehne (8) des Fahrzeugsitzes (5) angeordnet ist, der aus einer seitlichen Lehnenwange (21) im Wesentlichen nach vorn (Pfeil 23) entfaltbar ist und der in entfaltetem Zustand (ST2) mit seinem oberen Begrenzungsrand (24) benachbart zur Brüstung (16) der Seitenstruktur (3') zu liegen kommt, **dadurch gekennzeichnet, dass** sich der Kopfairbag (13) aus der Brüstung (16) heraus nur nach oben und parallel zum Seitenfenster (4) entfaltet.

2. Kraftfahrzeug nach Anspruch 1, **dadurch gekennzeichnet, dass** an der Lehnenwange (21) und/oder an einem Thoraxschutzmodul (12) eine Austrittsöffnung für den Thoraxairbag (19) unterhalb des Niveaus der Brüstung (16) liegt.

3. Kraftfahrzeug nach Anspruch 2, **dadurch gekennzeichnet, dass** der Thoraxairbag (19) aus der Austrittsöffnung nach schräg oben (Pfeil 25) in Richtung Brüstung (16) entfaltbar ist.

4. Kraftfahrzeug nach Anspruch 1, **dadurch gekennzeichnet, dass** der Kopfairbag (13) mit der ersten Aufblaseinrichtung (14) unmittelbar unter der Brüstung (16) angeordnet ist.

5. Kraftfahrzeug nach Anspruch 1, **dadurch gekennzeichnet, dass** der Thoraxairbag (19) etwa parallel zur Seitenstruktur (3') entfaltbar sind.

6. Kraftfahrzeug nach Anspruch 1, **dadurch gekennzeichnet, dass** der obere Begrenzungsrand (24) wenigstens abschnittweise einer gedachten Kreislinie (KS) folgt, die um die Schwenkachse (8') der neigungsverstellbaren Sitzlehne (8) verläuft.

7. Kraftfahrzeug nach Anspruch 6, **dadurch gekennzeichnet, dass** die Kreislinie (KS) und damit teilweise der obere Begrenzungsrand (24) abschnittweise konzentrisch um die Schwenkachse (8') der Sitzlehne (8) verlaufen.

8. Kraftfahrzeug nach Anspruch 1, **dadurch gekennzeichnet, dass** sich der Thoraxairbag (19) mit seinem unteren Begrenzungsrand (24') bis in den Beckenbereich (BI) des Fahrzeuginsassen erstreckt.

## Claims

1. A motor vehicle (1) with a body structure (2) including a side structure (3') having a side window (4), with a vehicle seat (5) fixed to the body structure (2) and with a side impact protection device (10) for a vehicle occupant, which side impact protection device (10) comprises a head air bag (13) which is inflatable upwards in the region of the window sill (16) of the side structure (3') and has a first inflation device (14), and a side air bag which is inflatable from the side of the vehicle seat (5) and has a second inflation device (20), which side air bag is formed as a thorax air bag (19) which, in the inoperative position, is arranged inside the backrest (8) of the vehicle seat (5) together with the second inflation device (20), is inflatable substantially forwards (arrow 23) from a side wall (21) of the backrest (8) and, in the inflated state (ST2), comes to lie with its upper boundary edge (24) adjacent to the window sill (16) of the side structure (3'), **characterised in that** the head air bag (13) is only inflated upwards out of the window sill (16) and parallel to the side window (4).

2. A motor vehicle according to claim 1, **characterised in that** an outlet opening for the thorax air bag (19) is located in the backrest side wall (21) and/or in a thorax protection module (12) below the level of the window sill (16).

3. A motor vehicle according to claim 2, **characterised in that** the thorax air bag (19) is inflatable obliquely upwards (arrow 25) from the outlet opening in the direction of the window sill (16).

4. A motor vehicle according to claim 1, **characterised in that** the head air bag (13) with the first inflation device (14) is arranged directly below the window sill (16).

5. A motor vehicle according to claim 1, **characterised in that** the thorax air bag (19) is inflatable substantially parallel to the side structure (3').

6. A motor vehicle according to claim 1, **characterised in that** the upper boundary edge (24) at least partially follows an imaginary circular line (KS) extending around the pivoting axis (8') of the tiltable backrest (8).

7. A motor vehicle according to claim 6, **characterised in that** the circular line (KS) and part of the upper boundary edge (24) extend partially concentrically around the pivoting axis (8') of the backrest (8).

8. A motor vehicle according to claim 1, **characterised in that** the lower boundary edge (24') of the thorax air bag (19) extends into the pelvic region (BI) of the vehicle occupant.

## Revendications

1. Véhicule automobile (1) avec une structure de carrosserie (2), qui comporte une structure latérale (3') munie d'une fenêtre latérale (4), avec un siège (5), fixé contre la structure de carrosserie (2), et avec un dispositif de protection contre les chocs latéraux (10) pour un occupant du véhicule, lequel dispositif de protection contre les chocs latéraux (10) comporte un sac gonflable de protection de la tête (13), qui peut se déployer vers le haut dans la zone de l'allège (16) de la structure latérale (3') et qui est muni d'un premier dispositif de gonflage (14), et un sac gonflable latéral qui peut se déployer latéralement hors du siège (5) et qui est muni d'un deuxième dispositif de gonflage (20), lequel sac de gonflable latéral est conçu sous forme d'un sac gonflable de protection du thorax (19) qui, dans la position de repos, est disposé conjointement avec le deuxième dispositif de gonflage (20) à l'intérieur du dossier (8) du siège (5), qui peut se déployer sensiblement vers l'avant (flèche 23) hors d'une joue latérale (21) du dossier et qui, dans la position déployée (ST2), est en appui avec son bord de délimitation supérieur (24) à proximité de l'allège (16) de la structure latérale (3'), **caractérisé en ce que** le sac gonflable de protection de la tête (13) se déploie hors de l'allège (16) uniquement vers le haut et parallèlement à la fenêtre latérale (4).

2. Véhicule automobile selon la revendication 1, **caractérisé en ce qu'**une ouverture d'éjection pour le sac gonflable de protection du thorax (19) est située en dessous du niveau de l'allège (16) sur la joue du dossier (21) et/ou sur un module de protection du thorax (12).

3. Véhicule automobile selon la revendication 2, **caractérisé en ce que** le sac gonflable de protection du thorax (19) peut se déployer hors de l'ouverture d'éjection en oblique vers le haut (flèche 25) vers l'allège (16).

4. Véhicule automobile selon la revendication 1, **caractérisé en ce que** le sac gonflable de protection de la tête (13) est disposé conjointement avec le premier dispositif de gonflage (14) directement en dessous de l'allège (16).

5. Véhicule automobile selon la revendication 1, **caractérisé en ce que** le sac gonflable de protection du thorax (19) peut se déployer sensiblement parallèlement à la structure latérale (3').

6. Véhicule automobile selon la revendication 1, **caractérisé en ce que** le bord de délimitation supérieur (24) suit au moins par zones une ligne imaginaire circulaire (KS), qui passe autour de l'axe de pivotement (8') du dossier (8) à inclinaison réglable.

7. Véhicule automobile selon la revendication 6, **caractérisé en ce que** la ligne circulaire (KS) et donc en partie le bord de délimitation supérieur (24) s'étendent par zones concentriquement à l'axe de pivotement (8') du dossier (8).

8. Véhicule automobile selon la revendication 1, **caractérisé en ce que** le sac gonflable de protection du thorax (19) s'étend avec son bord de délimitation inférieur (24') jusque dans la zone du bassin (BI) de l'occupant du véhicule.
